(19)

Europäisches
Patentamt
European
Patent Office
Office européen
des brevets

(11) **EP 2 775 658 A2**

(12) **EUROPEAN PATENT APPLICATION**

(43) Date of publication:
**10.09.2014 Bulletin 2014/37**

(51) Int Cl.:
**H04L 9/08** (2006.01)

(21) Application number: **14157411.1**

(22) Date of filing: **03.03.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **04.03.2013 GB 201303923**

(71) Applicant: **Option NV
3001 Leuven (BE)**

(72) Inventor: **Vercruysse, Jan
B-3052 Blanden (BE)**

(74) Representative: **IPLodge bvba
Technologielaan 9
3001 Heverlee (BE)**

(54) **A password based security method, systems and devices**

(57)     The invention relates to a method for secure operation of a plurality of devices, the devices suited for use in such method and the entire arrangement of such devices, and further computer program products and related machine readable signal storage media, governing said method or parts thereof, executed on or for configuring to prepare for execution on one or more of said devices, particularly the invention provides for authorization and permissions when logging into and off from a computer network from a computing device. The methods comprise of when executing a logoff procedure, storing the secret information on a second server by use of first credentials generated by a first server and when executing a logon procedure retrieving the secret information from the server by use of second credentials generated by a first server.

# Fugure 3c Secure OTP (Login)

OTP Server

(201)

(205)

$(310)\ K = \text{Hash}(\text{Pwd*} \;||\; \text{"Key"})$
$H_{\text{Pwd*}} = \text{Hash}(\text{Pwd*} \;||\; \text{"Pwd"})$
$H_{\text{OTP}_K} = \text{Hash}(\text{OTP}_K)$
$\text{if}\,((\text{Crd}_{\text{off}}.H_{\text{OTP}_K} \mathrel{!=} H_{\text{OTP}_K})\;||$
$\quad (\text{Crd}_{\text{off}}.H_{\text{Pwd*}} \mathrel{!=} H_{\text{Pwd*}}))$
$\qquad \text{abort}$  // not current or tampered with
$\text{OTP} = \text{decrypt}(K, \text{OTP}_K)$

(311) DELETE $\text{Crd}_{\text{off}}$

(312) Delete $\{\text{Crd}_{\text{off}},\, *\}$ from DB

EP 2 775 658 A2

**Description**

**Field of the invention**

The invention relates to a method for secure (authorized) operation (computing) of a plurality of devices, the devices suited for use in such method and the entire arrangement of such devices, and further computer program products and related machine readable signal storage media, governing said method or parts thereof, executed on or for configuring to prepare for execution on one or more of said devices, particularly the invention provides for authorization and permissions when logging into and off from a computer network from a computing device, even more particularly, the technology herein relates to authorizing users to access a remote computer that challenges the users to present secure authorization credentials by means of a software-generated password and, at the end of an access period, securely logging off returning information used to generate the password to the network.

**Background of the invention**

Many enterprise and not-for profit organizations now make use of computing devices they issue on a daily basis to workers to improve productivity; oftentimes the devices are stored securely when not in use and 'pooled' and no unique one-to-one mapping exists between an individual worker and device.

Frequently the data the workers have access to is either commercially (e.g. location of high value goods in transit) or personally (e.g. medical records) highly sensitive. With this has come the problem of securing access in an enterprise environment where devices, such as notebook computers or computing tablets, are used on a pooled basis.

One time passwords (OTP) are one commonly used aspect in a secure system. However, the solutions in use today rely heavily on physical security being maintained for the devices and hardware based password generators or users being trained so that they are not 'tricked' into disclosing OTP to an imposter or leaving unattended the generators, open to theft or willingly or unwillingly abuse. Of the bearer it is expected to protect the generator day and night. OTP is the metonym of the generator generating OTPs. OTP means as well the generator.

Therefore, known methods can be subject to attacks by 'social engineering' and/or capture of the generator devices.

**Summary of the invention**

This invention seeks to overcome one or more of the problems associated with the present methods and improve or maintain security whilst reducing the reliance on the physical security of devices. The invention relieves the bearer of the physical protection of the hardware generator during not-in-use periods.

**Brief description of the drawings**

These and other features and advantages are better and more completely understood by referring to the following detailed description of presently preferred exemplary illustrative non-limiting implementations in conjunction with the drawings, of which:

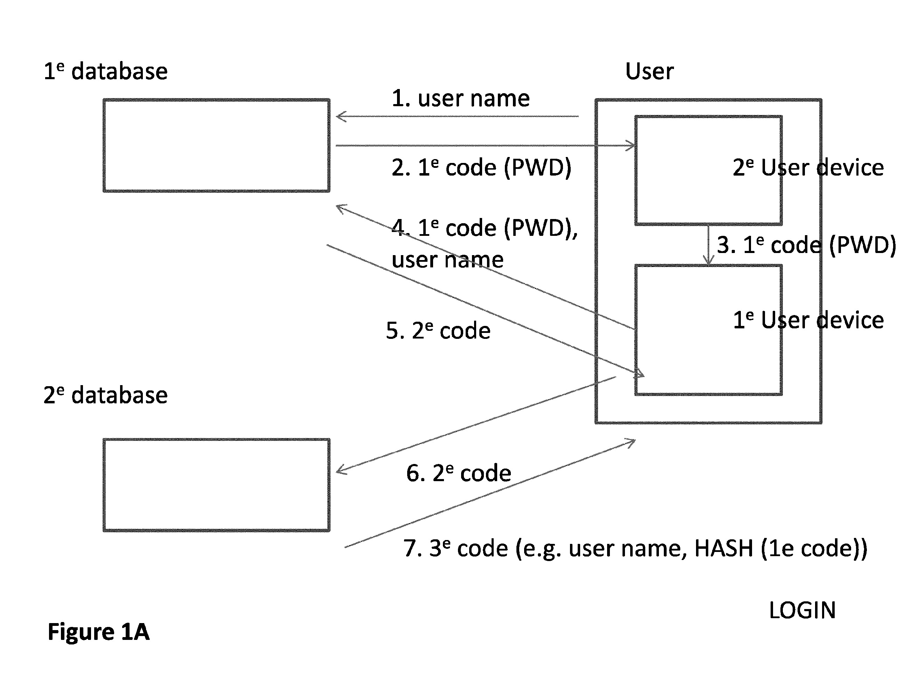

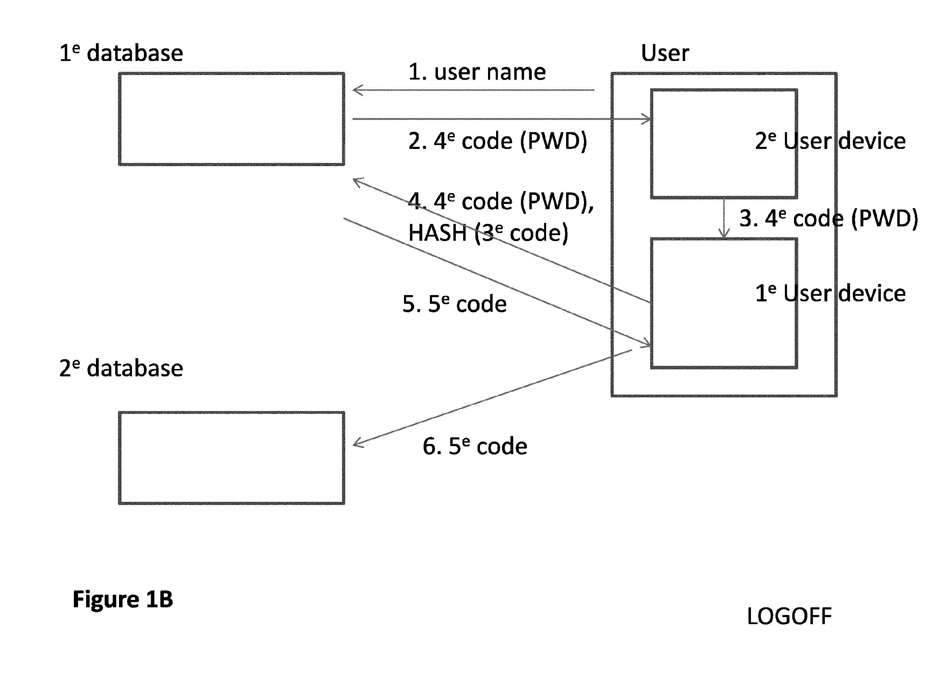

Figure 1a, b show respectively the secure login and logoff method in accordance with the invention.

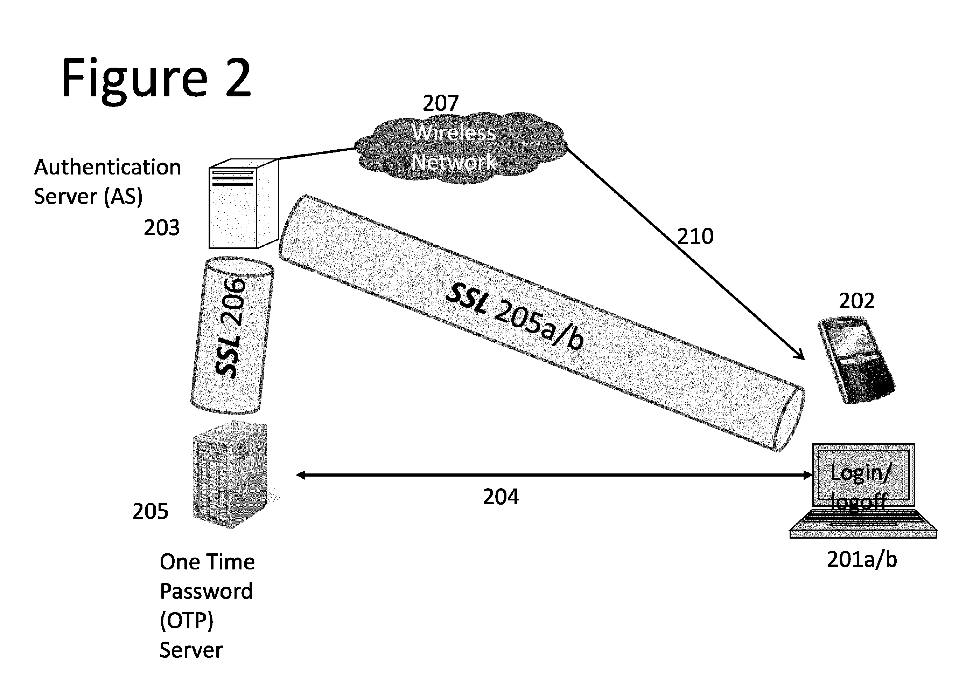

Figure 2 shows an exemplary non-limiting computer network with a remote computing device and mobile device.
Figures 3a, b, c and d show an exemplary non-limiting method of secure login.
Figures 4a, b and c show an exemplary non-limiting method of secure logoff associated with the login process of Figures 3.
Figures 5a and b show exemplary non-limiting additional steps to enhance the login method of

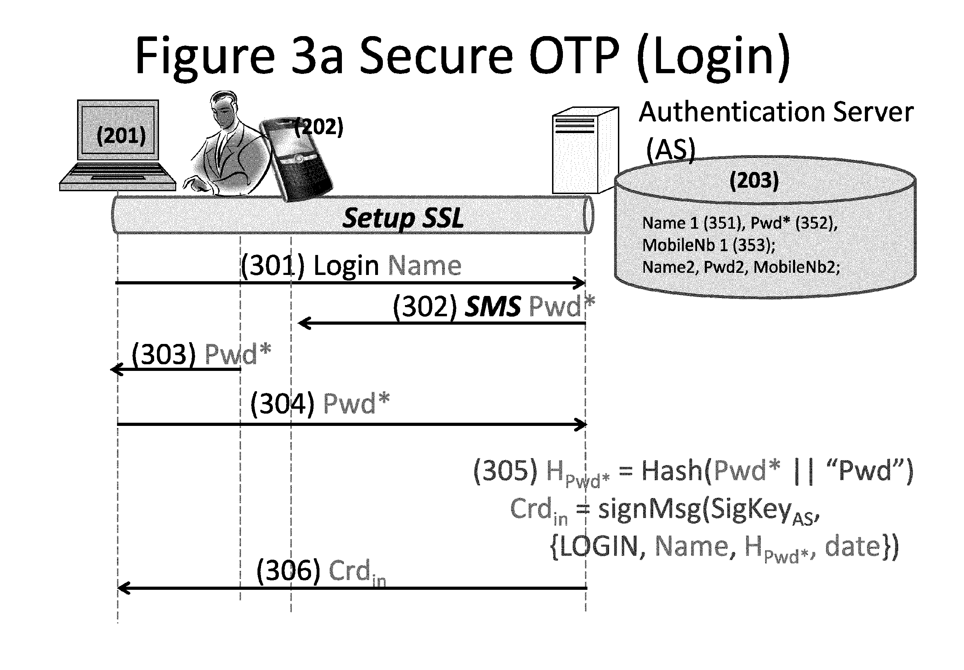

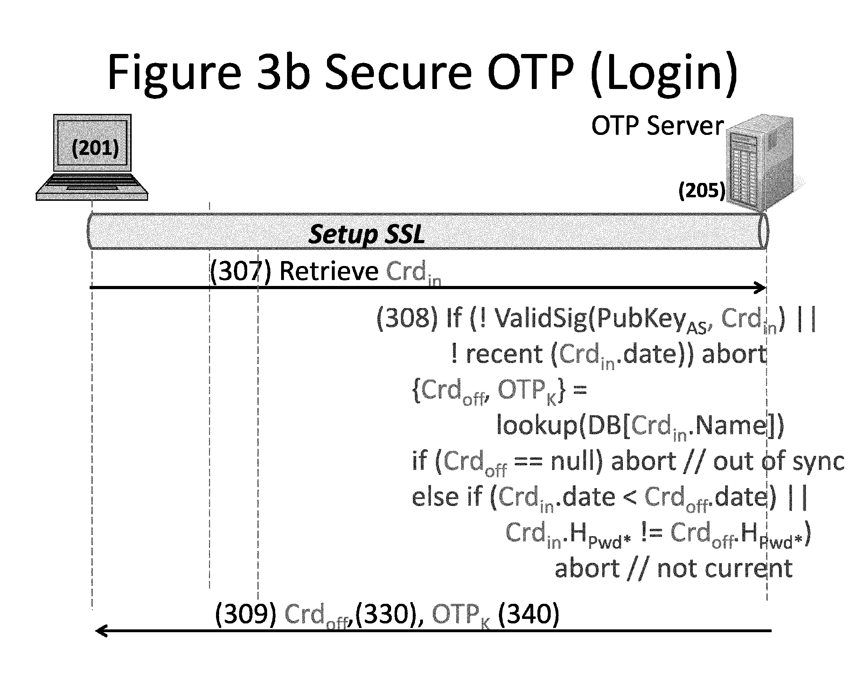

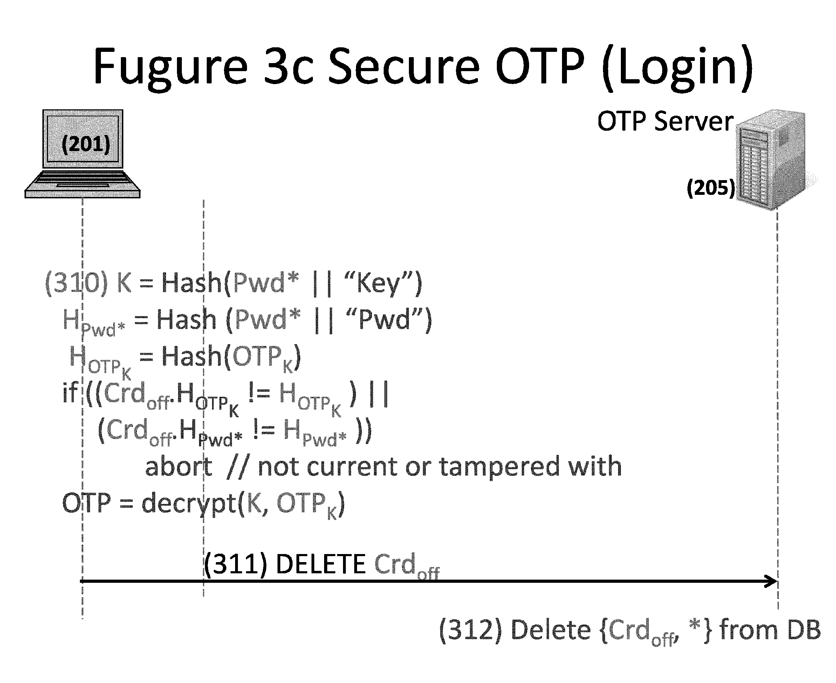

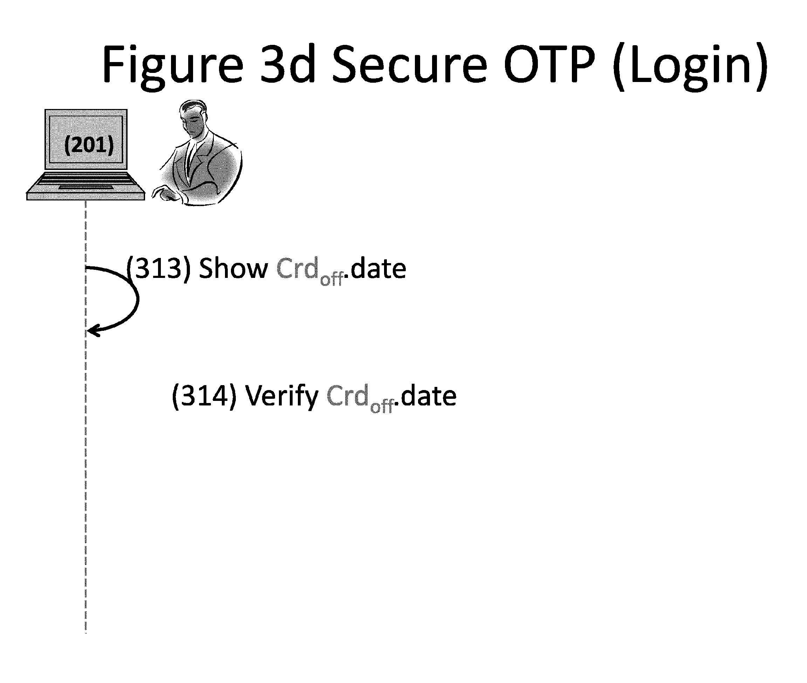

Figure 3 security using biometric data.

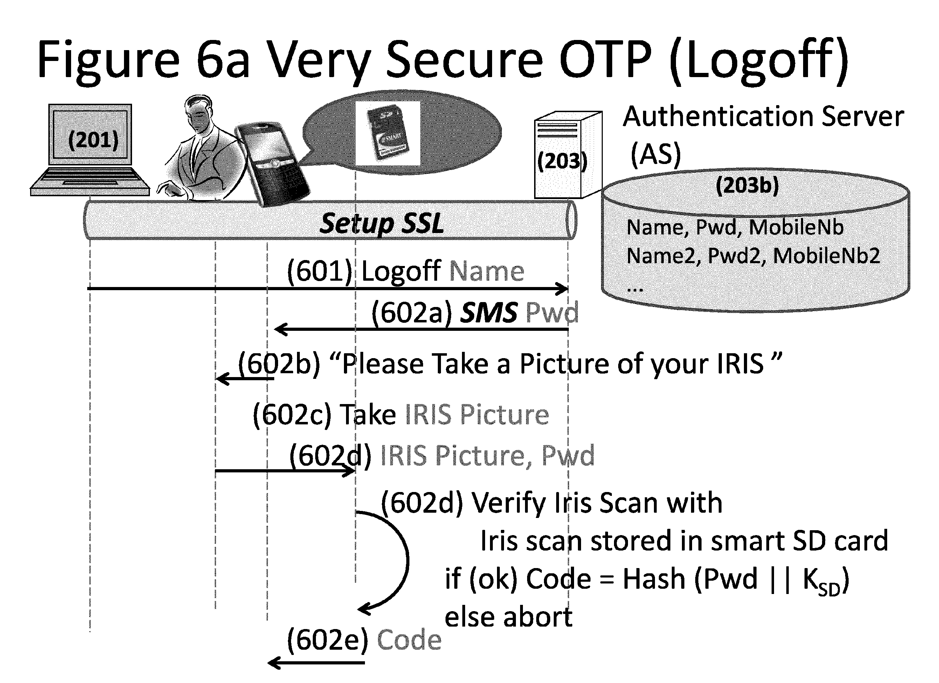

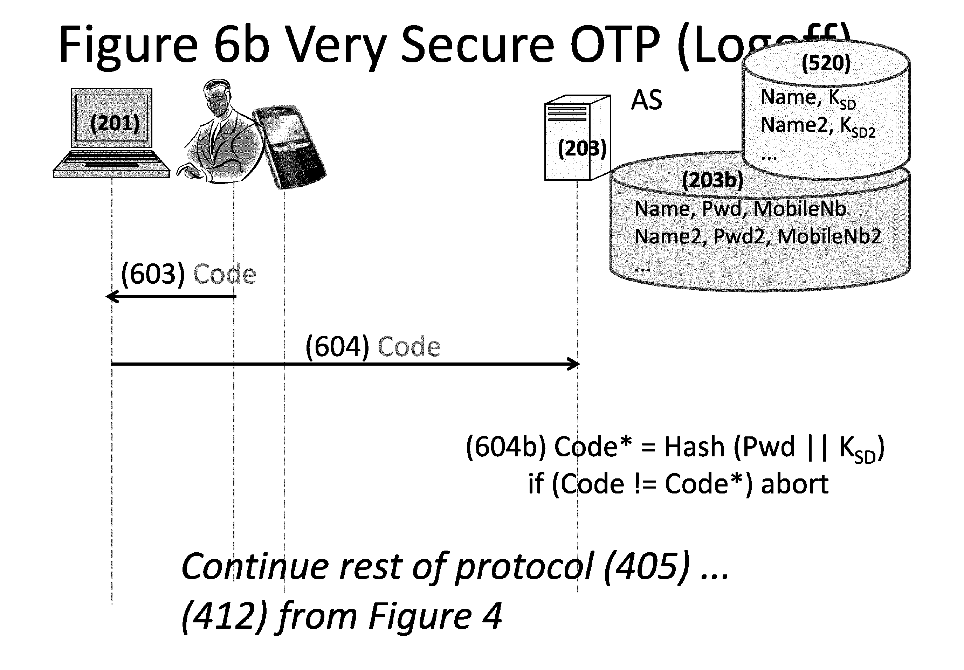

Figures 6a and b show exemplary non-limiting additional steps to enhance the logoff method of

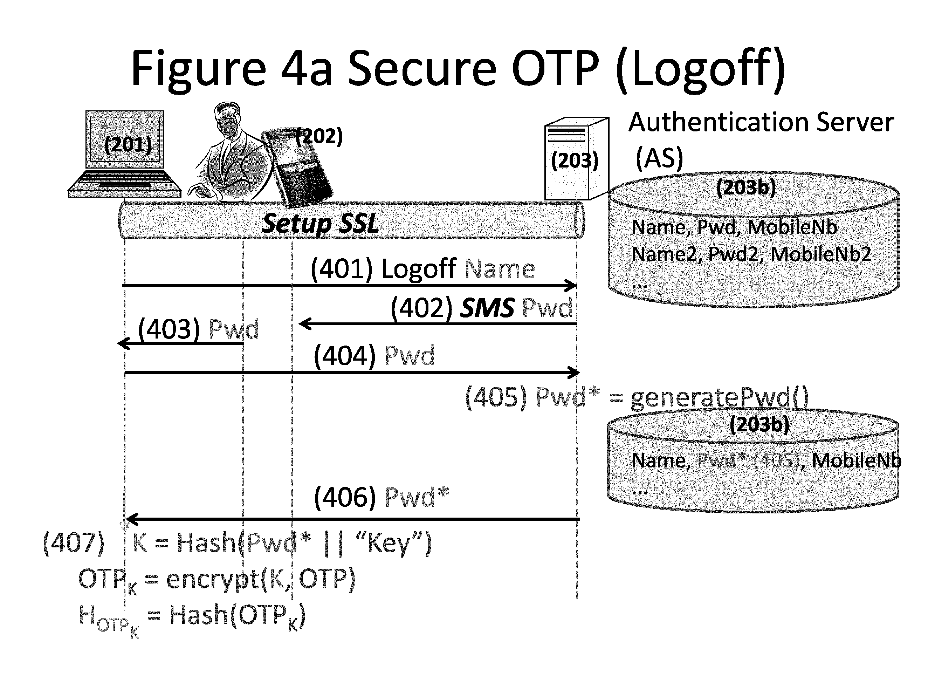

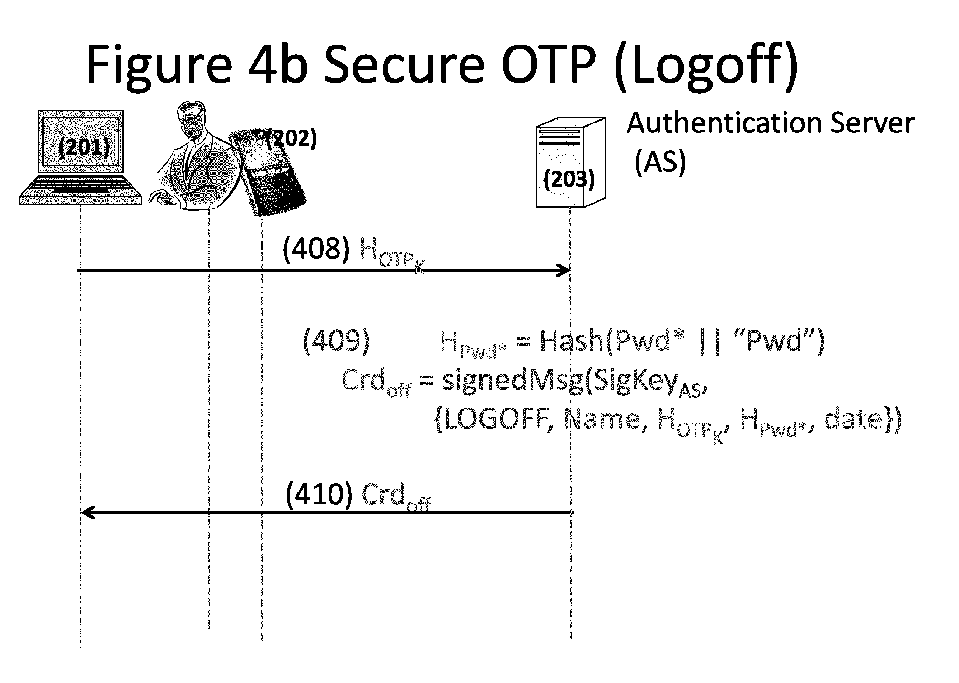

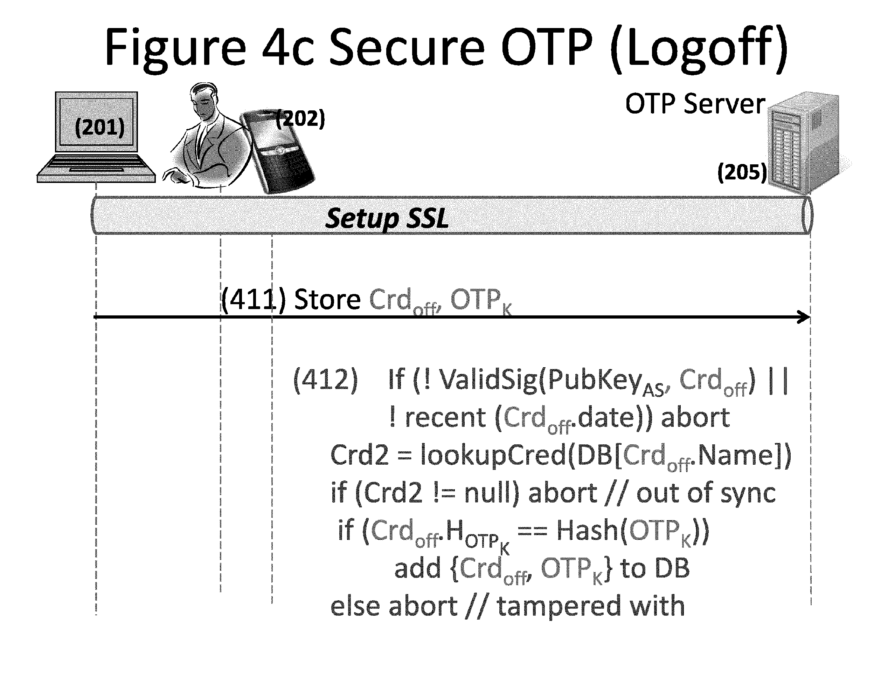

Figure 4 security using biometric data.

**Detailed description of the invention**

The invention relates to a method for secure operation of a plurality of devices, the devices suited for use in such method and the entire arrangement of such devices, and further computer program products and related machine readable signal storage media, governing said method or parts thereof, executed on or for configuring to prepare for execution on one or more of said devices, more in particular with secure operation relates to secure communication (of data, instructions or control information) enabling secure execution of one or more applications on a user device, such secure operation being only possible for an authorized user.

The invention operates in a context of distributed devices, more in particular a user device, whereon actually the user observes the execution of an application (the actual computations thereof can be performed entirely or in part elsewhere), and distant computer systems, communicating in a wired and/or wireless manner, used in part for one or more of the functions of performing application computations and/or storing of data, instructions, security codes and other control information. More in particular the invention operates in a context of at least a first and second database system (or double server arrangements), supporting the secure method, those database systems being physically separate from one another, preferably each of those database systems communicate with the user device in a different way, for instance a different communication protocol.

The invented method describes a selected sequence of steps of either providing information (like a user name, codes, like passwords, in particular software generated passwords) to either one of the devices and initiating by receipt of such information, after performing operations (like checking and creation of such information) a further step of providing or transmitting to an identified one of the devices, to thereby build a unique and hence trusted information set, which can then actually be used to launch the application urged for by the user. More in particular the method describes a consistent approach of using two sub-methods, in particular the login or set-up of a connection method, and the log-off or termination of a connection method, and in particular describes how these methods are interrelated, by indicating which codes are generated, an in particular stored when and where. Indeed when there is no activity by the user, the information is stored in the distributed system, and should be stored in such a manner that unintended or unauthorized access to part of the information can't lead to unauthorized use of the applications by an unauthorized user.

The invention is hence applicable for computer network and computing devices with remote computing functionality and hence mobile devices.

The method and system is now first described with respect to a typical use case and with reference to the drawings from which those skilled in the art will understand the invention can be more generally applied.

The present invention will be described with respect to a user "John" who works for an organization and wishes to make use of network resources. In the morning a worker, "John", is allocated a portable computing device, typically a tablet (201), "tablet A" (201a), from a pool of devices. After power-on a secure communication session such as a Secure Socket Layer (SSL) (205a) or alternatively Transport Layer Security (as such any measure of securing the data transfer is convenient but all methods are flawed by the fact that anyone can log in having the right username and (potentially stolen) password), is established between the device (201a) and a remote Authentication Server (AS) (203).

In the specification reference will be made simply to the 'secure layer' which encompasses present and future equivalent or improved methods of securing data and preventing eaves dropping and/or tampering with the data. All subsequent communication between the portable computing device and the AS is transported over the secure layer. The respective certificates made by the AS during day-session login and logoff, are used only once.

A login session (301) may commence; John logs in to an AS using portable computing device by entering his user name and, optionally, a user name specific password; the AS server authenticates itself (hence the user can check the credentials of AS). If the SSL/TLS can't be set up the user cannot proceed to the next stage, thus maintaining network security.

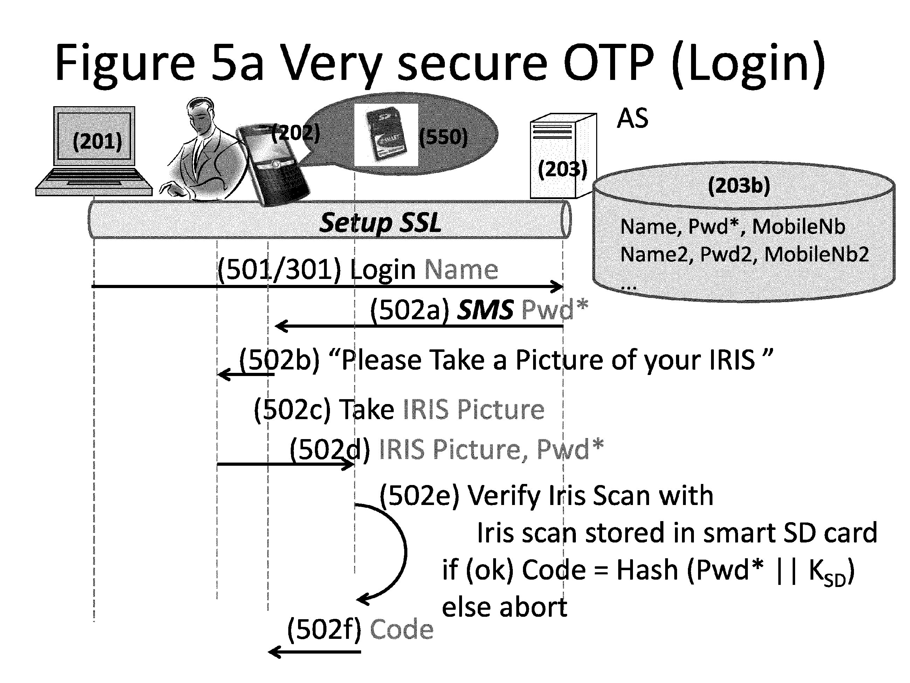

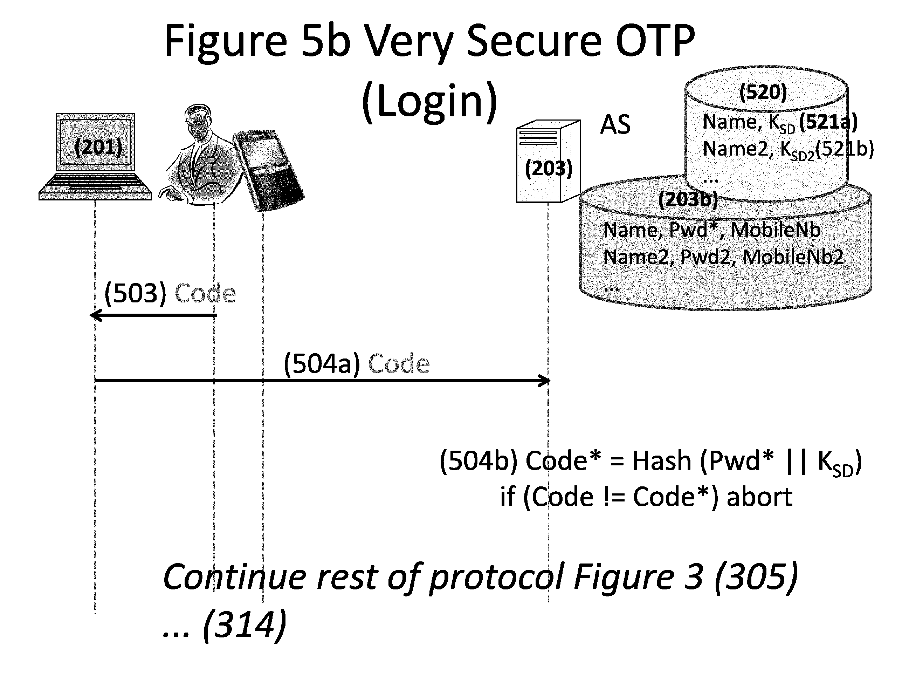

If the authentication or login step (301) is successful the AS server initiates the process to send a message to an independent device associated with John, by an alternative and independent route than via the secure layer. The independent device is preferably not the tablet that John is using to logon. The independent route does not share security with the secure layer nor is it dependent upon the presence or activity of the secure layer. The independent route is preferably to a device that is in the control and preferably in the possession of John. The independent route preferably has mobility and roaming capabilities such that John can be contacted independently of his location or of time. The independent route is preferably a wireless route. The message is the activation code, which is send to the device (202), and thereafter provided by John to the device (201). Note that the device (202) is associated with John in the AS database such that the AS database knows at least where to send to. The message comprises the session password, Pwd*, stored by the AS since the last logoff session. The independent route can be for instance by a means of a wireless Short Message Service (SMS) or other means suitable for the delivery, preferably of messages of a plurality of ASCII characters for sending the activation code to the mobile number associated with John in the AS database (230, the SMS comprising the session password, Pwd*, stored by the AS since the last logoff session or alternatively John might recall this himself. Optionally, in the case of an unsuccessful login attempt or multiple unsuccessful login attempts, an alarm may be generated (not illustrated). A further option illustrated in Figures 5a, 5b s to enhance the login authentication security procedure through the exchange of biometric data (5a, step 502 - 502a-f) such as an iris scan of John's eye. The iris scan data is compared with a known good iris scan of John's eye held in a secure biometric database (520) associated with the Authentication Server (203). Other biometric sources, such as fingerprints, may be used in addition, or as an alternative to, an iris scan. Note that the step of working via a separate independent device is optional. Alternatively the password can be stored or written down by John.

John then reads the Pwd* (302) from his independent device such as the mobile device to which the SMS was sent (202) and enters Pwd* (303) into the personal computing device to complete 'his' authentication. The tablet acknowledges the received Pwd* (304) to the AS. The AS (203) then processes the Pwd* to generate the login Credentials $Crd_{in}$ (306), according to a process exemplified but not limited by the calculation step (305):

$$H_{Pwd*} = Hash(Pwd* \,||\, ``Pwd")$$

$$Crd_{in} = signMsg(SigKey_{AS}, \{LOGIN, Name, H_{Pwd*}, date\})$$

where "Pwd" is known and only known by both AS and 201 (f.i. the last but one Pwd generated by the AS or at least known temporarily.

where $SigKey_{AS}$ is the private key (PKI system) of the AS.

where the "Hash" function is a one way function such as a secure hash function or other equivalent cryptographic process whereby it is it is infeasible to: (a) generate a message that has a given hash, (b) modify a message without changing the hash and (c) find two different messages with the same hash and, where ideally, the hash function is easy to calculate, where signMsg is a signing function with key $SigKey_{AS}$ and signing the content between the quotes {}

In a subsequent step, John's portable computing device such as the tablet A (201) is loaded with 'his' secure OTP keys from an OTP server (205). The OTP server stores all not-in-use OTP keys protected by the very personal activation codes; they are encrypted with Pwd* and optionally Key. A daemon running on the OTP server (205) hands over or stores OTP keys only after presenting AS server credentials.

John's portable computing device (201a or b) wants to retrieve the OTP keys. Therefore it sends the login credential ($Crd_{in}$ (306)) (307) to the OTP server (205). The OTP server (205) performs a check on the data (f.i. the date) against last logoff credentials ($Crd_{off}$) (330) to reject incorrect or out of date credentials and abort the login process if necessary. An exemplary non-limiting method may comprise the tests for the validity of the credentials:

$$If \,(!\, ValidSig(PubKey_{AS}, Crd_{in}) \,||\,!\, recent \,(Crd_{in}.date)) \,then \,abort \,// \,credentials \,are \,not \,recent \,or$$

$$invalid.$$

$$\{Crd_{off}, OTP_K\} = lookup(DB[Crd_{in}.Name]); \,// \,perform \,a \,database \,lookup$$

$$If \,(Crd_{off} == null) \,then \,abort \,// \,credentials \,out \,of \,sync$$

$$else \,if \,(Crd_{in}.date < Crd_{off}.date) \,||\, Crd_{in}.H_{Pwd*} \,!= Crd_{off}.H_{Pwd*}) \,then \,abort \,// \,credentials \,not$$

$$current.$$

At the end of the usage period John must perform a Logoff session (401 - 412); this process returns the OTP keys to the OTP server (205). Note that only John can return the portable computing device such as the tablet and the Pwd* of the login session is not stored on the portable computing device such as the tablet. Upon returning the portable computing device such as the tablet to the secure store he needs to re-enter it to complete 'his' authentication. The previous activation code is rendered obsolete, designated by Pwd; the AS server presents a new session password, Pwd*. Then John's portable computing device such as the tablet receives credentials from the AS server. The encrypted OTP keys are moved to the OTP server (205).

Optionally, a logoff using biometric data is required a process similar to an inverse of the biometric login process previously described is used as shown in Figures 6a and 6b. Note that a biometric logoff may be requested by the AS independently of the login process, that is, it is not necessary to have performed a biometric login in order to perform a biometric logoff and vice-versa.

Optionally, John may be required to enter biometric data (602b-e). The biometric data requested is contained in the SMS message, or equivalent message delivery service (602b) may be the same as requested during login (502b) or could be different; in a non-limiting example both login and logoff could use an iris scan or login could use iris scan and logoff use a fingerprint scan. The biometric data is verified by comparing it with biometric data stored on a pluggable memory device (550) such as a Secure Digital (SD) Memory Card. In one embodiment, using an iris scan as the biometric data, a verification process is performed comprising the following steps

Verify Iris scan stored in smart SD card

$$\text{if (ok) Code} = \text{Hash (Pwd* } || K_{SD}) \text{ else abort}$$

Where $K_{SD}$ (521a) is the term used for the secure Key associated with the SD Memory card (550) containing the biometric data used for comparison with the 'real time' biometric data demanded by the system that the user provides. The Code generated is then presented on the screen of the device to enable the user (John) to enter the code to the tablet and subsequently for the code to be forwarded to the AS where it can be verified by a hashing process, such as Code* = Hash (Pwd* $||K_{SD}$); proceeding to the next step or aborting the process as appropriate.

Next day John picks up a portable computing device such as another tablet B from the public pool and repeats the process described for tablet A; it is of no consequence the tablet B is not the same tablet as tablet A.

Those skilled in the art will recognize a number of features that contribute to security:

Firstly, the session password (Pwd) is changed during the secure logoff process and on each login and log off cycle a different key is used to encrypt OTP keys. At login the system verifies last logoff date/time.

Secondly, the OTP Server (205) verifies whether recent user authentication happened during the login and logoff session. It's only the the AS server which generate credentialsThe secure logoff generates only AS server (201) credentials and only accepts the One Time Password key ($OTP_K$) if the secure hash is correct.

The OTP server shall recognize always the same AS server ID whatever user logs in, each day with another tablet. The authentication token comprises an expiration time and is digitally signed by the AS server and is authenticated at the OTP server. The OTP server decrypts the authentication token, confirms a match with the digital signature of the AS server."

The reason why this SecureTransfer application doesn't put the AS server and the OTP server in the same box, is for the obvious reasons that we don't want to concentrate all parts of the puzzle, the credentials and the secrets in the same hands.

The device sends to the AS server only the hash of what he wants to send to the AS server and subsequently to the OTP server. The client wants to have the hash firstly signed by the AS server. Therefore SecureTransfer doesn't need a secure SSL/TLS connection to the OTP server. A tampered connection will be immediately flagged. John would wait in that case to hand over his OTP keys until the connection is restored.

SecureTransfer doesn't care about whether or not the credential is cached in the user device. The credentials are very transitory and are only valid for one transfer session of OTP keys (after being encrypted) to the OTP server. SecureTransfer doesn't need to destroy the credentials. In this sense one could say that AS is preparing a One Time Password (OTP) for letting the user accessing the OTP server only once. Logging in and off of the day session requires two different OTP credentials prepared by AS.

SecureTransfer seems to be aimed at enabling sharing of computing tablets (or similar) mobile computing devices with the possibility to secure content on an individual/personalized basis in a corporate/enterprise environment. Why it's done in this way, is for all the good reasons mentioned: tampering, external hacking, recovering system fault tolerances, preventing bullying of coworkers (practical jokes), theft, carelessness, fraud (working with credentials of coworker).

Thirdly, if the database (205a) associated with the OTP server (205) is stolen overall system security is not compromised, since the database contains no sensitive or confidential information that can be used to gain access. Furthermore, if the database is tampered with and the $OTP_K$ modified it will not be accepted because $Crd_{off}.H_{OTP_K}$ will be invalid. Furthermore, $Crd_{off}$ cannot be modified, as signature will be invalid and, for any older version of $Crd_{off}$, the $OTP_K$ $Crd_{off}$ .HPwd* will be considered to be invalid and the corresponding login or logoff process aborted.

Optionally, a pluggable memory storage device or card, such as a Smart SD card (550), can be configured to contain biometric information that never leaves the memory device. Therefore, if a user's mobile phone is stolen the iris scan, or other biometric scan verification, step will fail. A substitute memory storage device will not be able to access and pass the tests as a key (521a), termed the SD card Key or $K_{SD}$ in this embodiment, is used to generate the required code.

In more general terms one recognizes a first user device (201), a first database system (203) as the AS or the like server, optionally a second user device (202), and a second database (205) as OTP or the like server, and the steps of (1) providing a user name to a first database system, (2) initiating by said user name providing, transmitting from said first database computer system a first code or password PWD to the user (either directly to the first user device or indirectly via a second user device), said first code to be provided to said first user device, (3) transmitting by said first user device said first code to said first database computer system, (4) initiating by this transmission, transmitting (after performing checks and computations such as one or more of the steps of comparing, hashing, extra signature based coding) via a first connection from said first database computer system, a second code denoted credentials (and optionally some content) to said first user device, said second code or at least part thereof being unique (due to the present of credentials) for the combination user and first database computer system, (5) transmitting, via a second connection, different than said first connection, by said first user device said second code to the second database computer system, physically separate from said first database computer system, (5) initiating by said second code transmission (after comparing with a stored fifth code, determined at the previous logoff), transmitting from said second database computer system a stored third code or OTP to said first user device, said third code being necessary for executing an application solely by the corresponding authorized user of said first user device. As indicated while the above fits in a method for secure or setup of a secure execution of an application by an authorized user on a first user device, also a method for terminating a secure execution of an application by an authorized user on a first user device is provided, and is constructed to operate in a consistent way with the login method, in that codes generated in one method are used by the other, and some of the steps are similar, indeed while logging off at least the authentication with the AS server is repeated, in that on request of the user, (1) transmitting from said first database computer system, to the user, a fourth code; transmitting by said first device a finger print of an encrypted version of said third code OTPk, to said first database computer system, (2) initiating by this transmission, transmitting from said first database computer system, a fifth code or credential off to said user first device, said fifth code being unique for the combination user and first database computer system, (5) transmitting by said first user device the fifth code to said second database computer system to store the fifth code for later retrieval of said third code.

Alternatively stated the invention provides for a method of secure login and logoff of a device to or from a computer network, the network comprising an authentication server and (one time) password server, the method steps comprising the authentication server establishing a secure socket with a remote computing device; said authentication server, upon receipt of a user name over the link established in the previous step, causing a message to be sent to a second device associated with the said user name said message comprising a password (pwd*); upon receiving over the secure socket associated with said remote computing device a password corresponding to the said password (pwd*) sent in the previous step calculating login credentials ($Crd_{in}$), for instance from a hash operation with the said password (pwd*) and subsequently forwarding said $Crd_{in}$ over the secure socket associated with said remote computing device; the (One Time) Password Server upon receiving a $Crd_{in}$ over the secure socket associated with said remote computing device (preferably after checking the $Crd_{in}$ corresponds to the $Crd_{in}$ expected based on the calculation in the previous step; and/or checking that the logoff associated with the previous successful log in was received and/or if unsatisfactory terminating the login attempt; otherwise performing the next step; forwarding a message comprising logoff credentials ($Crd_{off}$) and (One Time) Password key ($OTP_K$) over the secure socket associated with said remote computing device; optionally receiving over the secure socket associated with said remote computing device a command to DELETE $Crd_{off}$ and subsequently deleting {$Crd_{off}$, *} from the database associated with the OTP server; while at the end of the period of validity, during which the remote computing device is permitted access to the network, performing a secure logoff method comprising: said AS receiving the fingerprint of $OTP_K$ over the secure socket associated with said remote computing device and further comprising validating or checking the $OTP_K$ received, and if satisfactory calculating and subsequently forwarding $Crd_{off}$ over the secure socket associated with said remote computing device; said OTP validating the $Crd_{off}$ and $OTP_K$ received from said mobile computing device and if correct returning or providing the $OTP_K$ to the OTP server database for use during subsequent login methods according to method steps (a) to (g) above.

Alternatively stated the invention provides for a method of secure login and logoff of a device to or from a computer network, whereby the operation terminates if certain checks are unsatisfactory completed.

Alternatively stated the invention provides for a method of secure login and logoff of a device to or from a computer network, whereby information is generated and stored, and optionally intentionally deleted by either one of said methods for use during subsequent call upon said methods.

The invention relates to use of devices, such as an OTP hardware USB device for logon securely to a company's servers at a distant location (for instance at home), preferably such device or hardware is integrated into a modem with his own proprietary, very enclosed OS, since with this proprietary OS it's very hard to tamper with. The same way you want to remove the OTP USB hardware key (in the not integrated case) during those periods you are not logged on (for safety and security reasons) one want to do the same thing with the integrated "hardware" or software version of that OTP device, by exploiting the fact that an OTP device consists of two parts, the running engine and a secret part.

The invention provides for storing the secret part onto the OTP server when I am not logged on for a long period while retrieve it from the OTP server when starting again with my computer sessions. Whatever user device such as computer, laptop or tablet used for performing work, the OTP keys (the Secrets) are retrieved from the OTP server are ready for use. So the Secrets are not bound to a particular laptop or tablet. For the sake of clarity the OTP server are not generating the OTP keys or Secrets, they only stow it away, of course securely. A new set of keys should be requested from an OTP providing platform.

The above described invention is equally applicable beyond OTP. In essence the use of a Secret or secret information, needed to enable operations on a user device (like starting an application or getting access to data from a remote place) is considered, whereby one wants to store and retrieve it later on for use, even in the user device is changed. A requirement is to store securely, reliably, safely, easily and fast my (the users) secrets into the cloud, and retrieve it later on for use. Any unwanted, unforeseen, abusive, malicious action from the user, his environment, thieves, intruders, should be prevented or risks thereto reduced, or eventual damages kept to a minimum.

In the invention to store and retrieve My secrets (Secrets) two servers are used: the Authentication server and the Store server (=OTP server). The authentication server generates credentials, which are used to get access to the Store server, in particular two different sets of credentials are created, once to store the secrets, the other time to retrieve those again, for the next job session on a different user device or laptop to be used.

In an embodiment of the invention the logoff credentials may comprise of one or more of the following information;

    a. Notification of the Store whether these are credentials for storage or retrieval, here storage. (LOGIN, LOGOFF)
    b. A unique fingerprint of the Secrets you want to store. (the Hash function)
    c. Name of the user
    d. Timestamp at creation of the credentials
    e. The fingerprint of a secret only the laptop user knows. The user will check his own secret again after the whole process is finalized, hence after the full retrieval of Secrets.

These credentials preferably are sealed with the AS hallmark or signature, which provides proof of the integrity and origin of data. The Store is able to and should check the authenticity of the AS signature.

The login credentials may comprise of one or more of all elements as found in the logoff credentials except for the Secrets, for the obvious reason we want to retrieve them this time and they are unknown at creation of the login credentials.

Under the auspices of the logoff credentials the Secrets are stored during the logoff process. Credentials are verified. Especially the fingerprint of the Secrets to be stored is compared. The username is used as entry point into the Store database.

Under the auspices of the login credentials both Secrets and the previous logoff credentials are retrieved during the login process. The username is used as entry point into the Store database. The Store is verifying the login credentials. Before -at the Store-, and after retrieval -then at the user side-, the fingerprint of the secret only known to the user is compared. If the shelf of the Store is empty of Secrets the retrieval process is aborted or an alarm is sent. After retrieval and at the user side the fingerprint of the Secrets retrieved is compared once more. The fingerprint of the secret only known to the user is compared. Finally one might empty the Store shelf.

In a further embodiment before storage the Secrets are encrypted with a key only known to the user. Reversely after retrieval the Secrets are restored with the same key as previous.

In yet another embodiment depending on the use case, one may check first, before any storage whether the shelf of the Store is empty of Secrets. One may decide to abort the storage process or send an alarm if not empty.

In another embodiment a SSL/TLS secure link is established between the AS server and the Store.

In another embodiment the usage of SMSes 1) during login 2) during logoff is provided, to avoid man in the middle attacks.

In yet another embodiment usage of biometric data is performed.

Note that in embodiments of the invention precautionary measures can be taken in case the battery runs out and the user cannot logoff, in particular by not removing Keys but remain them valid and in memory, particular in non-volatile memory. Keys will continue to apply. Note that the first keys (or bootstrap) are loaded during the installation of the software and the initialization with the server at the Store site.

In summary a method is provided for secure logon on a computer system from a distant location with a user device with integrated hardware, comprising secret information, needed to operate on the user device, the method comprising when execution a logoff procedure, storing the secret information on a second server by use of first credentials generated by a first server and; when executing a logon procedure retrieving the secret information from the server by use of second credentials generated by a first server. Said hardware can be OTP hardware. The first and second credentials are typically different. Note that said first database may authenticate itself to said first user device.

**Claims**

1. A method for secure execution of an application by an authorized user on a first user device, said method comprising the steps of:

   providing a user name to a first database system via a first connection;
   initiating by said user name providing, transmitting from said first database computer system a first code to the user, said first code to be provided to said first user device;
   transmitting by said first user device said first code to said first database computer system;
   initiating by this transmission, transmitting via said first connection, a second code to said first user device, said second code being unique for the combination user and first database computer system;
   transmitting, via a second connection, different than said first connection, by said first user device said second code to a second database computer system, physically separate from said first database computer system;
   initiating by said second code transmission (after comparing with a stored fifth code), transmitting from said second database computer system a stored third code to said first user device, said third code being necessary for executing an application solely by the corresponding authorized user of said first user device.

2. A method for terminating a secure execution of an application by an authorized user on a first user device as in claim 1, in such a way that re-establishing thereof in accordance with the method of claim 1 is again secured, said method comprising the steps of:

   on request of the user, transmitting from said first database computer system, to the user, a fourth code, optionally said fourth code equals said first code;
   transmitting by said first device a finger print of an encrypted version of said third code, to said first database computer system;
   initiating by this transmission, transmitting from said first database computer system, a fifth code to said user first device, said fifth code being unique for the combination user and first database computer system;
   transmitting by said first user device the fifth code to said second database computer system to store the fifth code and optionally said third code for later retrieval of said third code.

3. The method of claim 1 and/or 2, wherein said transmitting from said first database computer system a first code or fourth code to the user, comprising transmitting from said first database computer system a first code or fourth code to a second user device, physically separate from said first user device, said second user device and first database computer system communicate through a third connection, being different than said first and second connection, said first code or fourth code to be provided to said first user device by the user.

4. The method of claim 2, wherein said fourth code being different from said first code.

5. The methods of any of the claims 1 to 4, wherein one or more of the transmitted codes are further subject to a further encrypting at transmit side before transmitting and corresponding decrypting of such encrypted codes at the receive side.

6. The method of claim 5, wherein on said second code and/or fifth code asymmetric keying coding is applied whereby the first database exploits its private code while the second database applies the corresponding public code, whereby after having being applied the obtained digital signatures is appended to the resp. code.

7. The method of any of the claims 1 to 6, wherein one or more of the steps of transmitting and receiving of codes between the devices and databases being complemented by transmitting and receiving the date of sending or an encrypted version thereof.

8. The method of claim 7, wherein one or more steps of encrypting, fingerprinting or coding exploit the date of sending.

9. A user device, being adapted for execution of the steps performed by the first user device in any of the methods of claims 1 to 8.

10. A database computer system, being adapted for execution of the steps performed by the first database computer system in any of the methods of claims 1 to 8.

**11.** A database computer system, being adapted for execution of the steps performed by the second database computer system in any of the methods of claims 1 to 8.

**12.** A user device, being specially adapted for execution of the steps performed by the second user device in any of the methods of claims 1 to 8.

**13.** A system or computer network comprising a first user device as in claim 9; a first database computer system as in claim 10; and a second database computer system as in claim 11; wherein preferably
there is no direct interaction between the first and second database computer systems.

**14.** The system of claim 13 , further comprising a second user device as in claim 12.

**15.** A computer program product comprising code segments that when executed on a suitable processing engine implement those steps in any of the methods of claims 1 to 8 to be executed in the first database computer system; and/or the second database computer system; and/or the first user device; and/or the second user device.

**16.** A machine readable signal storage medium, storing the computer program product of claim 15 .

Figure 1A

**1ᵉ database**

**User**

1. user name

2. 4ᵉ code (PWD)

**2ᵉ User device**

3. 4ᵉ code (PWD)

4. 4ᵉ code (PWD), HASH (3ᵉ code)

5. 5ᵉ code

**1ᵉ User device**

**2ᵉ database**

6. 5ᵉ code

**Figure 1B**

LOGOFF

EP 2 775 658 A2

# Figure 2

# Figure 3a Secure OTP (Login)

**(201)** **(202)**

Authentication Server (AS)

**(203)**

Name 1 (351), Pwd* (352),
MobileNb 1 (353);
Name2, Pwd2, MobileNb2;

*Setup SSL*

(301) Login Name

(302) *SMS* Pwd*

(303) Pwd*

(304) Pwd*

(305) $H_{Pwd*}$ = Hash(Pwd* || "Pwd")
$Crd_{in}$ = signMsg(SigKey$_{AS}$,
{LOGIN, Name, $H_{Pwd*}$, date})

(306) $Crd_{in}$

EP 2 775 658 A2

# Figure 3b Secure OTP (Login)

OTP Server

**(201)**

**(205)**

**Setup SSL**

(307) Retrieve $Crd_{in}$

(308) If (! ValidSig($PubKey_{AS}$, $Crd_{in}$) ||
! recent ($Crd_{in}$.date)) abort
{$Crd_{off}$, $OTP_K$} =
lookup(DB[$Crd_{in}$.Name])
if ($Crd_{off}$ == null) abort // out of sync
else if ($Crd_{in}$.date < $Crd_{off}$.date) ||
$Crd_{in}.H_{Pwd*}$ != $Crd_{off}.H_{Pwd*}$)
abort // not current

(309) $Crd_{off}$,(330), $OTP_K$ (340)

EP 2 775 658 A2

# Fugure 3c Secure OTP (Login)

OTP Server

(201)

(205)

(310) $K = Hash(Pwd^* \,||\, \text{"Key"})$

$H_{Pwd^*} = Hash(Pwd^* \,||\, \text{"Pwd"})$

$H_{OTP_K} = Hash(OTP_K)$

if $((Crd_{off}.H_{OTP_K} \,!=\, H_{OTP_K}) \,||$

$(Crd_{off}.H_{Pwd^*} \,!=\, H_{Pwd^*}))$

    abort // not current or tampered with

$OTP = decrypt(K, OTP_K)$

(311) DELETE $Crd_{off}$

(312) Delete $\{Crd_{off}, *\}$ from DB

EP 2 775 658 A2

# Figure 3d Secure OTP (Login)

**(201)**

(313) Show $Crd_{off}.date$

(314) Verify $Crd_{off}.date$

EP 2 775 658 A2

# Figure 4a Secure OTP (Logoff)

Authentication Server (AS)

(201) (202) (203)

**(203b)**
Name, Pwd, MobileNb
Name2, Pwd2, MobileNb2
...

**Setup SSL**

(401) Logoff Name

(402) **SMS** Pwd

(403) Pwd

(404) Pwd

(405) Pwd* = generatePwd()

**(203b)**
Name, Pwd* (405), MobileNb
...

(406) Pwd*

(407) K = Hash(Pwd* || "Key")

$OTP_K = encrypt(K, OTP)$

$H_{OTP_K} = Hash(OTP_K)$

EP 2 775 658 A2

# Figure 4b Secure OTP (Logoff)

(201)　(202)　(203)　Authentication Server (AS)

(408) $H_{OTP_K}$

(409)　$H_{Pwd*}$ = Hash(Pwd* || "Pwd")
$Crd_{off}$ = signedMsg($SigKey_{AS}$,
{LOGOFF, Name, $H_{OTP_K}$, $H_{Pwd*}$, date})

(410) $Crd_{off}$

EP 2 775 658 A2

# Figure 4c Secure OTP (Logoff)

OTP Server

(201)   (202)   (205)

**Setup SSL**

(411) Store $Crd_{off}$, $OTP_K$

(412)   If (! ValidSig(PubKey$_{AS}$, $Crd_{off}$) ||
        ! recent ($Crd_{off}$.date)) abort
Crd2 = lookupCred(DB[$Crd_{off}$.Name])
if (Crd2 != null) abort // out of sync
 if ($Crd_{off}$.H$_{OTP_K}$ == Hash($OTP_K$))
        add {$Crd_{off}$, $OTP_K$} to DB
else abort // tampered with

EP 2 775 658 A2

# Figure 5a Very secure OTP (Login)

**(201)** **(202)** **(550)** AS **(203)**

**(203b)**
Name, Pwd*, MobileNb
Name2, Pwd2, MobileNb2
...

*Setup SSL*

(501/301) Login Name

(502a) *SMS* Pwd*

(502b) "Please Take a Picture of your IRIS "

(502c) Take IRIS Picture

(502d) IRIS Picture, Pwd*

(502e) Verify Iris Scan with
Iris scan stored in smart SD card
if (ok) Code = Hash (Pwd* || $K_{SD}$)
else abort

(502f) Code

EP 2 775 658 A2

# Figure 5b Very Secure OTP (Login)

**(201)**

**(203)** AS

**(520)**
Name, K$_{SD}$ **(521a)**
Name2, K$_{SD2}$ **(521b)**
...

**(203b)**
Name, Pwd*, MobileNb
Name2, Pwd2, MobileNb2
...

(503) Code

(504a) Code

(504b) Code* = Hash (Pwd* || K$_{SD}$)
if (Code != Code*) abort

*Continue rest of protocol Figure 3 (305)
... (314)*

EP 2 775 658 A2

# Figure 6a Very Secure OTP (Logoff)

(201)

(203)

Authentication Server (AS)

(203b)

Name, Pwd, MobileNb
Name2, Pwd2, MobileNb2
...

**Setup SSL**

(601) Logoff Name

(602a) **SMS** Pwd

(602b) "Please Take a Picture of your IRIS "

(602c) Take IRIS Picture

(602d) IRIS Picture, Pwd

(602d) Verify Iris Scan with
    Iris scan stored in smart SD card
if (ok) Code = Hash (Pwd || $K_{SD}$)
else abort

(602e) Code

EP 2 775 658 A2

Figure 6b Very Secure OTP (Logoff)